# EUROPÄISCHE PATENTANMELDUNG

(11) **EP 0 922 608 A1**
(43) Veröffentlichungstag der Anmeldung: **16.06.1999**
(21) Anmeldenummer: 98121063.6
(22) Anmeldetag: 06.11.1998
(51) Int. Cl.: B60N 2/44, A47C 31/10

(54) **Schonbezug für Kraftfahrzeugsitze**

(30) Priorität: 10.12.1997 DE 19754721; 10.12.1997 DE 29721786 U
(71) Anmelder: ACTIVLINE Autozubehör GmbH & Co. KG, 55469 Simmern/Hsr. (DE)
(72) Erfinder: Siefarth, Lothar, 55499 Riesweiler (DE)
(74) Vertreter: Weiss, Ursula, Dr.

(57) **Zusammenfassung**

Der Schonbezug für den Sitz- und/oder Lehnteil (2) von Kraftfahrzeugsitzen ist dadurch gekennzeichnet, daß er aus schrumpfbarer Kunststoffolie besteht und im übergezogenen Zustand durch Einschrumpfen der Folie an dem Kraftfahrzeugsitz- und/oder -lehnteil (2) verrutschsicher befestigt werden kann.

## Beschreibung

Die Erfindung betrifft einen Schonbezug für den Sitz- und/oder Lehnteil von Kraftfahrzeugsitzen.

Schonbezüge für Kraftfahrzeugsitze werden vor allem in der Kraftfahrzeugfertigungsindustrie benötigt, wenn in den Kraftfahrzeugen, in denen die endgültigen Sitze und Sitzbezüge bereits eingebaut sind, noch Installationsarbeiten oder Funktionstests durchgeführt werden müssen, bei denen sich der Installateur oder Tester auf den Kraftfahrzeugsitz setzt. Dabei besteht in hohem Maße das Risiko der Beschmutzung oder gar Beschädigung der Sitzbezüge.
Um solche Beschmutzungen oder Beschädigungen zu vermeiden, werden im Stand der Technik bereits Schonbezüge aus Webstoffen, Vliesen oder auch Folien eingesetzt. Diese Bezüge haben jedoch alle den gravierenden Nachteil, daß sie mit Standardmaßen gefertigt sind, um auf die verschiedensten Kraftfahrzeug-Sitztypen aufgezogen werden zu können. Sie haben infolgedessen keine gute Paßform, sondern liegen in der Regel relativ locker über dem zu schützenden Sitz und verrrutschen schon bei geringer Beanspruchung, z.B. beim Ein- und Aussteigen aus dem Kraftfahrzeug, und gewähren somit keinen zuverlässigen Abdeckungsschutz. Dieser Nachteil der schlechten Paßform ist besonders stark bei den bekannten Bezügen aus Folienmaterial ausgeprägt. Die Bezüge aus Webstoffen oder Vliesen haben hingegen noch den zusätzlichen Nachteil, daß sie schon allein aus Kostengründen sehr dünn sind und schnell und leicht von Schmutz durchdrungen werden und/oder reißen.

Der vorliegenden Erfindung liegt die Aufgabe zugrunde, einen Schonbezug zu schaffen, der die Sitz- und/oder Lehnteile von Kraftfahrzeugsitzen sicher vor Beschmutzung insbesondere durch Öle und Schmierfette schützt, der stabil gegenüber mechanischer Beanspruchung und Beschädigungen ist, der verrutschsicher auf einen Kraftfahrzeugsitz aufgezogen werden kann, und der bei alledem kostengünstig in der Herstellung und einfach in der Handhabung ist.

Eine Lösung dieser Aufgabe besteht in der Bereitstellung eines Schonbezugs für den Sitz- und/oder Lehnteil von Kraftfahrzeugsitzen, der aus schrumpfbarer Kunststoffolie besteht und im übergezogenen Zustand durch Einschrumpfen an dem Kraftfahrzeugsitz verrutschsicher befestigt werden kann.

Aufgrund des Folienmaterials ist der erfindungsgemäße Schonbezug nahezu absolut dicht gegen jede Art von Schmutz, die in einem Kraftfahrzeugfertigungsbetrieb regelmäßig anfällt, und er ist außerordentlich stabil gegen Zerreißen oder Beschädigungen durch die üblicherweise verwendeten Werkzeuge, beispielsweise Schraubenzieher, Zangen, Drähte u.ä. . Der Schonbezug kann ganz bequem auf jedes beliebige Kraftfahrzeugsitz- und/oder -lehnteil aufgezogen werden und anschließend durch Erwärmen, beispielsweise mit Heißluft, soweit eingeschrumpft werden, bis er dem Kraftfahrzeugsitz(teil) formschlüssig ansitzt und praktisch nicht mehr verrutschen kann. Zum endgültigen Entfernen des Schonbezugs wird der Bezug einfach mit einer Schere oder einem Messer auf- bzw. eingeschnitten und abgenommen.

Bei einer Variante des erfindungsgemäßen Schonbezugs ist vorgesehen, daß die Kunststoffolie praktisch ausschließlich in einer Richtung der Folienebene schrumpfbar ist. Bei einer anderen Variante ist die Kunststoffolie dagegen in zwei nahezu rechtwinklig zueinander verlaufenden Richtung der Folienebene schrumpfbar. Grundsätzlich ist ein Schonbezug bevorzugt, bei dem die Kunststoffolie in der einen Schrumpfrichtung um 50-80%, vorzugsweise etwa 70 % ihrer ursprünglichen Ausdehnung und in der rechtwinklig dazu verlaufenden Schrumpfrichtung um 0-10%, vorzugsweise etwa 5% ihrer ursprünglichen Ausdehnung schrumpfbar ist. Die genannten Varianten haben alle den Vorteil, daß einerseits eine verrutschsichere Paßform gewährleistet ist und andererseits die angepaßte Folie nur in einer oder allenfalls zwei Richtungen unter Spannung steht und damit noch genügend Flexibilität besitzt, um Druck- Zug- oder Scherkräften, die bei den herkömmlichen Schonbezügen leicht zu Beschädigungen führen, standzuhalten,

Bei einer bevorzugten Ausführungsform der Erfindung ist vorgesehen, daß der Schonbezug aus einem im wesentlichen quadratischen oder rechteckigen Sitz- und/oder Lehnteil und vorzugsweise wenigstens zwei damit verbundenen Seitenwänden besteht, die mit dem Sitz- und/oder Lehnteil einen Winkel einschließen, der zwischen 45° und 90° beträgt. Die Richtung der ― gegebenenfalls größeren ― Schrumpffähigkeit sollte parallel zu zwei einander gegenüberliegenden Seiten des Sitz- und/oder Lehnteils verlaufen, und zwar vorzugsweise in Längsrichtung des Sitz und/oder Lehnteils, d.h. parallel zur Wirbelsäule und/oder den Oberschenkeln eines Insassen. Diese Ausführungsform hat den Vorteil, daß die Hauptspannung, die den Schonbezug am Kraftfahrzeugsitz festhält in einer Richtung besteht, in der praktisch am wenigstens Druck- und Zugkräfte entstehen, während vor allem in mehr oder weniger rechtwinklig dazu verlaufenden Richtungen solche Kräfte verstärkt auftreten, schon allein beim ein― und aussteigen beliebiger Personen.

Bei einer fertigungstechnisch vorteilhaft einfachen Ausführungsform besteht der erfindungsgemäße Schonbezug aus einem im wesentlichen quadratischen oder rechteckigen Zuschnitt für das Sitz- und/oder Lehnteil und wenigstens einem im wesentlichen bandförmigen Zuschnitt für die Längs- und/oder Breitseitenteile, und diese Zuschnitte sind miteinander verbunden, insbesondere vernäht ― oder auch verklebt oder verschweißt.

Um eine besonders einfache Handhabung beim Aufziehen des Schonbezugs zu gewährleisten, sollte der Zuschnitt für das Sitz- und/oder Lehnteil an einer Breitseite (kurzen Seite) eine zungenförmige Verlängerung aufweisen, die mit den Stirnseiten (kurzen Seiten) des Zuschnitts bzw. der Zuschnitte für die Längsseitenteile über eine Verbindungsnäht verbunden ist, vorzugsweise ebenfalls vernäht oder verschweißt oder verklebt.

Zur besonderen Verstärkung der Verbindungsnaht zwischen der zungenförmigen Verlängerung und dem bzw. den bandförmigen Zuschnitt(en) ist erfindungsgemäß vorgesehen, daß die an diese Verbindungsnaht angrenzenden freien Längsseiten der zungenförmigen Verlängerung einerseits und des bzw. der bandförmigen Zuschnitts/Zuschnitte andererseits in ihrem der Verbindungsnaht benachbarten Bereich verstärkt sind, insbesondere eine quer zur Verbindungsnaht verlaufende Saumnaht aufweisen.

Bei dem Zuschnitt für die Seitenteile handelt es sich vorzugsweise entweder um ein einstückiges Teil, das zwei Längsseiten und eine dazwischen liegende Breitseite überdeckt, oder um zwei separate Teile für die beiden Längsseiten, und als Seitenteil für die dazwischen liegende Breitseite dient der an dieser Breitseite entsprechend länger ausgebildete Endabschnitt des Zuschnitts für das Sitz- bzw. Lehnteil.

Eine Variante des erfindungsgemäßen Schonbezugs, die sich besonders für Kraftfahrzeuglehnteile mit schwenkbar befestigter Kopf- bzw. Nackenstütze eignet, ist dadurch gekennzeichnet, daß in einer Längsseite des Bezugs eine verschließbare Öffnung ausgebildet ist, die ein besonders einfaches Aus- und Abziehen des Bezugs ermöglicht, und die ggf. einen Zugang zum Lehnenoberteil (= obere Breitseite der Lehne) freiläßt, um die Kopf- bzw. Nackenstütze zu montieren. Ein solcher Zugang kann außerdem auch oder zusätzlich dadurch realisiert daß das betreffende Längsseitenteil und/oder das angrenzende Breitseitenteil (für die Abdeckung des Lehnenoberteils) verkürzt ausgebildet sind, so daß im Bereich der entsprechenden Kante von Lehnenlängsseite und Lehnenoberseite eine Aussparung in dem Bezug entsteht.

Das Folienmaterial des erfindungsgemäßen Schonbezugs hat vorzugsweise eine Dicke von etwa 100 µm.

Die Erfindung wird im folgenden anhand eines in den Zeichnungen dargestellten Ausführungsbeispiels näher erläutert. Es zeigen
- Fig.1:: einen erfindungsgemäßen Schonbezug in perspektivischen Ansicht, und
- Fig. 2:: die Zuschnitteile des Schonbezugs gemäß Fig. 1,

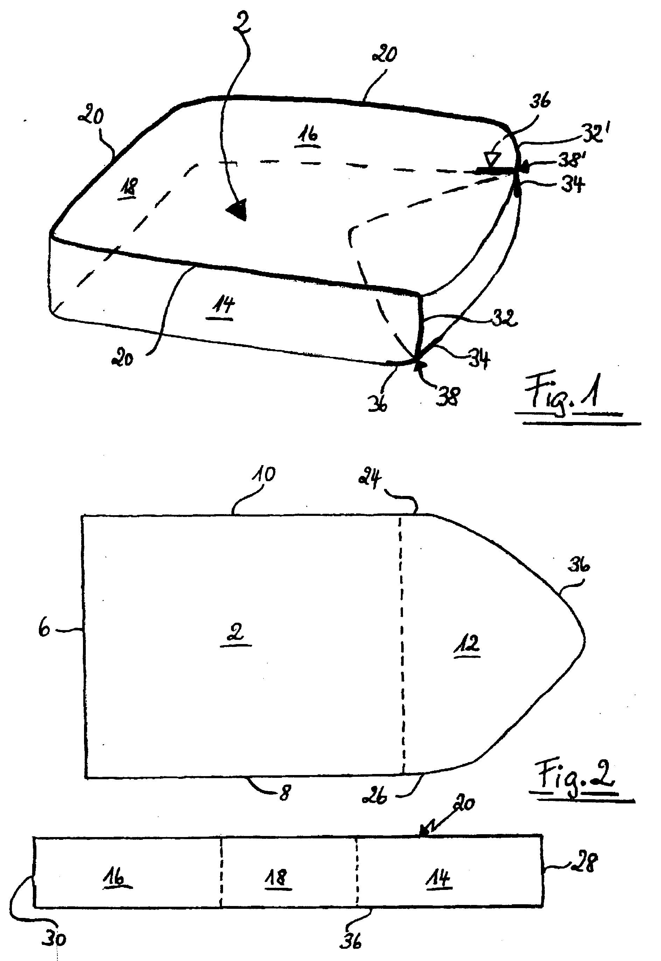

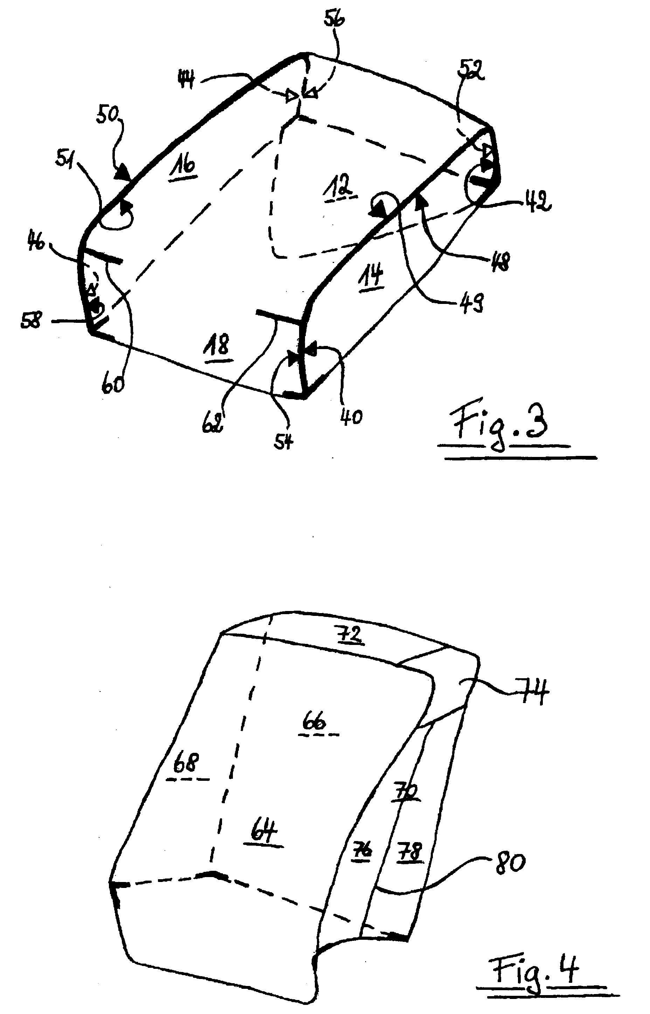

Der in Fig. 1 und Fig. 2 dargestellte Schonbezug aus Kunststoffolie ist als Überzug für den Sitzteil oder Lehnteil eines Kraftfahrzeugsitzes ausgebildet. Er besteht aus einem flächigen und im wesentlichen rechteckigen Zuschnitt für das Sitz- bzw. Lehnteil 2, das an seiner einen Breitseite 4 eine zungenförmige Verlängerung 12 aufweist. An der gegenüberliegenden Breitseite 6 und an den beiden Längsseiten 8, 10 ist das Sitz- bzw. Lehnteil 2 mit im wesentlichen rechtwinklig daran angrenzenden, Seitenwänden 14, 16, 18 verbunden, insbesondere vernäht ― oder auch verschweißt oder verklebt. Die Seitenwänden 14, 16, 18 sind vorzugsweise entweder ― wie hier dargestellt ― die entsprechenden Abschnitte 14, 16, 18 eines einzigen bandförmigen Kunststoffolienteils bzw. Kunststoffolienzuschnitts, wobei die Verbindungssnaht 20 ebenfalls einteilig, d.h. ununterbrochen durchgehend ist. Oder es sind ― wie in Fig. 3 dargestellt ― zwei separate Zuschnitte für die beiden Längsseitenwände 14 und 16 ausgebildet, und als Breitseitenwand 18 dient der entsprechend länger ausgebildete Endabschnitt des Zuschnitts für das Sitz- bzw. Lehnteil 2 an der Breitseite 6, die der zungenförmige Verlängerung 12 gegenüber liegt. Bei der letztgenannten Variante sind die beiden Zuschnitte für die Längsseitenwände 14, 16 jeweils an ihrem zum Sitz- bzw. Lehnteil 2 hinweisenden Längsseitenrand 48 bzw. 50 mit den entsprechenden Längsseitenrandabschnitten 49 bzw. 51 des Sitz- bzw. Lehnteils 2 verbunden und an ihren Stirnseitenrändern (kurzen Seitenrändern) 40, 42 bzw. 44, 46 mit den entsprechenden Längsseitenrandabschnitten 52 und 54 bzw. 56 und 58 verbunden. Zur Unterstützung einer Kantenbildung zwischen dem die Breitseitenwand 18 bildenden Endabschnitt und dem übrigen Zuschnitt für das Sitz- bzw. Lehnteil 2 sind zwei Abnäher 60, 62 entlang des gewünschten Kantenlaufs ausgebildet.

Die zungenförmige Verlängerung 12 ist an ihren dem Sitz- bzw. Lehnteil 2 benachbart liegenden Längsseitenabschnitten 24, 26 mit den Stirnseiten 28, 30 des bandförmigen Kunststoffolienzuschnitts 20 verbunden, insbesondere vernäht ― oder auch verschweißt oder verklebt.

Zur besonderen Verstärkung dieser Verbindungsnaht 32 32' zwischen der zungenförmigen Verlängerung 12 und dem oder den Kunststoffolienzuschnitt(en) 20 oder 14 und 16 sind die daran angrenzende freie Längsseite 34 der zungenförmigen Verlängerung 12 und die freie Längsseite 36 des bzw. der Kunststoffolienzuschnitt(e) 20 oder 14 und 16 jeweils in dem der Verbindungsnaht 32 32' benachbarten Bereich verstärkt, beispielsweise durch eine Saumnaht 38, 38' oder ein aufgenähtes Stoßband (nicht dargestellt) o.ä.

In dem Zuschnitt für das Sitz- bzw. Lehnteil 2 und dem/ den Zuschnitt(en) 20 oder 14 und 16 für die Seitenwände ist die Kunststoffolie so orientiert, daß die Richtung der (größeren) Schrumpffähigkeit parallel zu den Längsseiten 8, 10 des Sitz- bzw. Lehnteils 2 verläuft.

Die in Fig. 4 dargestellte Variante des erfindungsgemäßen Schonbezugs ist besonders für Kraftfahrzeugsitze mit schwenkbarer Nackenstütze geeignet. Fig. 4 zeigt nur den Schonbezug(-teil) für die Lehne eines Kraftfahrzeugsitzes. Dieser Lehnen-Schonbezug kann mit einem erfindungsgemäßen Sitzteil-Schonbezug entweder einstückig verbunden oder zweistückig kombiniert sein. Der dargestellte Lehnen-Schonbezug umfaßt ein Vorderteil 64 zur Abdeckung der Anlehnungsfläche, ein Rückenteil 66 zur Abdeckung der Lehnenrückwand, zwei Seitenteile 68, 70 zur Abdeckung der beiden Lehnenlängsseitenwände und ein Oberteil 72 zur Abdeckung des Lehnenoberseite (= oberer Breitseite) . Im Bereich der einen Lehnenlängsseitenwand stoßen Vorderteil 64, Rückenteil 66, betreffendes Seitenteil 68 und Oberteil 72 im Bereich der Kanten von Anlehnungsfläche, Lehnenrückwand, Lehnenlängsseitenwand und Lehnenoberseite lückenlos aneinander und sind entlang dieser Stoßkanten zu einem diesseits geschlossenen Bezugabschnitt miteinander verbunden. An der gegenüberliegenden Längsseitenwand dagegen reichen Oberteil 72 und betreffendes Seitenteil 70 nicht bis an die Kante von Lehnenoberseite und Lehnenlängsseitenwand, sondern lassen in diesem Bereich eine Aussparung 74 im Schonbezug frei. Bis zu dieser Aussparung 74 sind das Oberteil 72 und das betreffende Seitenteil 70 mit dem Vorder- und Rückenteil 64, 66 entlang der Stoßkanten verbunden. Das verkürzte Seitenteil 70 besteht vorzugsweise aus zwei Teilstücken 76, 78, die beide die Länge des verkürzten Seitenteils 70 aufweisen und die sich in der Breite zur Breite der betreffenden Längsseitenwand bzw. des gegenüberliegenden Seitenteils 68 ergänzenden. Diese Teilstücke 76, 78 sind entlang ihrer Stoßkante 80 lösbar miteinander verbunden, beispielsweise mittels eines Klebebands, eines Klettverschlusses o.ä. Diese Verschluß ermöglicht ein einfaches Anlegen des Schonbezugs an einen Kraftfahrzeugsitz, an dem eine schwenkbare Kopf- bzw. Nackenstütze entweder bereits montiert ist oder noch montiert werden soll.

## Patentansprüche

1. Schonbezug für den Sitz-und/oder Lehnteil von Kraftfahrzeugsitzen, dadurch gekennzeichnet,
daß der Schonbezug aus schrumpfbarer Kunststoffolie besteht und im übergezogenen Zustand durch Einschrumpfen an dem Kraftfahrzeugsitz verrutschsicher festlegbar ist.

2. Schonbezug nach Anspruch 1, dadurch gekennzeichnet,
daß die Kunststoffolie praktisch ausschließlich in einer Richtung der Folienebene schrumpfbar ist.

3. Schonbezug nach Anspruch 1, dadurch gekennzeichnet,
daß die Kunststoffolie in zwei nahezu rechtwinklig zueinander verlaufenden Richtung der Folienebene schrumpfbar ist.

4. Schonbezug nach Anspruch 3, dadurch gekennzeichnet,
daß die Kunststoffolie in der einen Schrumpfrichtung um 50-80%, vorzugsweise etwa 70 % ihrer ursprünglichen Ausdehnung und in der rechtwinklig dazu verlaufenden Schrumpfrichtung um 0-10%, vorzugsweise, etwa 5% ihrer ursprünglichen Ausdehnung schrumpfbar ist.

5. Schonbezug nach einem der Ansprüche 1 bis 4, dadurch gekennzeichnet,
daß er aus einem im wesentlichen quadratischen oder rechteckigen Sitz- und/oder Lehnteil und damit verbundenen Seitenwänden besteht, wobei die Seitenwände mit dem Sitz- und/oder Lehnteil einen Winkel zwischen 45° und 90° einschließen, und daß die Richtung der (größeren) Schrumpffähigkeit parallel zu zwei einander gegenüberliegenden Seiten des Sitz- und/oder Lehnteils, vorzugsweise in Längsrichtung des Sitz und/oder Lehnteils, verläuft.

6. Schonbezug nach Anspruch 5, dadurch gekennzeichnet,
daß er aus einem im wesentlichen quadratischen oder rechteckigen Zuschnitt für das Sitz- und/oder Lehnteil und wenigstens einem im wesentlichen bandförmigen Zuschnitt für die Längs- und/oder Breitseitenteile besteht, und daß die Zuschnitte miteinander verbunden sind.

7. Schonbezug nach Anspruch 6, dadurch gekennzeichnet,
daß der Zuschnitt für das Sitz- und/oder Lehnteil an einer Breitseite eine zungenförmige Verlängerung aufweist, die mit den beiden angrenzenden Stirnseiten des Zuschnitts bzw. der Zuschnitte für die Längsseitenteile über eine Verbindungsnaht verbunden ist.

8. Schonbezug nach Anspruch 7 , dadurch gekennzeichnet,
daß die an die Verbindungsnaht angrenzenden freien Längsseiten der zungenförmigen Verlängerung einerseits und des Zuschnitts bzw. der Zuschnitte für die Längsseitenteile andererseits in ihrem der Verbindungsnaht benachbarten Bereich verstärkt sind, insbesondere eine quer zur Verbindungsnaht verlaufende Saumnaht aufweisen.

9. Schonbezug nach einem der Ansprüche 1 bis 8, dadurch gekennzeichnet,
daß wenigsten ein Längsseitenteil mit eine verschließbaren Öffnung versehen ist, die sich in Längsrichtung und vorzugsweise über die gesamte Länge des Längsseitenteils erstreckt.
